(19) Europäisches Patentamt
European Patent Office
Office européen des brevets

(11) **EP 4 332 069 A1**

(12) **EUROPEAN PATENT APPLICATION**

(43) Date of publication:
**06.03.2024 Bulletin 2024/10**

(21) Application number: **22193758.4**

(22) Date of filing: **02.09.2022**

(51) International Patent Classification (IPC):
**C03C 17/00** (2006.01)          **C03C 17/25** (2006.01)

(52) Cooperative Patent Classification (CPC):
**C03C 17/007; C03C 17/25;** C03C 2217/228

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Nederlandse Organisatie voor toegepast-natuurwetenschappelijk Onderzoek TNO**
  **2595 DA 's-Gravenhage (NL)**

• **Chemelot Scientific Participations B.V.**
  **6167 RD Geleen (NL)**

(72) Inventors:
• **YEUNG, Cindy Po Keh**
  **2595 DA 's-Gravenhage (NL)**
• **HABETS, Arnoldus Dominicus Maria Roberto**
  **2595 DA 's-Gravenhage (NL)**
• **BUSKENS, Pascal Jozef Paul**
  **2595 DA 's-Gravenhage (NL)**

(74) Representative: **V.O.**
  **P.O. Box 87930**
  **2508 DH Den Haag (NL)**

(54) **THERMOCHROMIC COATING WITH NANOPARTICLES**

(57)     The disclosure pertains to thermochromic materials such as coated articles with thermochromic coatings comprising non-thermochromic nanoparticles. In a preparation method for such articles, the nanoparticles are included in the liquid coating composition that is applied to the substrate.

EP 4 332 069 A1

## Description

### Field

The invention pertains to thermochromic materials, for instance to thermochromic coating compositions, which can be used for instance for smart glass applications.

### Introduction

Vanadium (IV) oxide ($VO_2$) is known as being able to undergo a fully reversible metal-to-semiconductor phase transition between a low temperature (LT) monoclinic phase, $VO_2$ (M) and a high temperature (HT) rutile phase, $VO_2$ (R). The rutile phase is a semi-metal, reflecting and/or absorbing a wide range of solar wavelengths in the infrared. The monoclinic phase is a semiconductor and reflects and/or absorbs considerably less solar infrared light. It has been suggested to use $VO_2$ in window coatings to obtain glass windows for buildings which block more (near) infrared from sunlight with increasing temperatures. This can advantageously be used to decrease the energy consumption of buildings with windows, in particular for decreasing the energy consumption used for cooling (air conditioning).

The thermochromic switching temperature of $VO_2$ (M) is 68°C. Doping with metal ions can be used to decrease the switching temperature e.g. to 10-30°C.

WO 2020/242314 and WO 2021/242109 describe thermochromic coatings comprising $VO_2$ and $SiO_2$. Yeung et. al, Solar Energy Materials and Solar Cells, 230 (2021), 111238 describe preparation of single layer thermochromic coatings comprising nanodomains of $VO_2$ (M) and $SiO_2$.

There remains a desire for thermochromic coatings having improved optical properties in combination with both good mechanical properties, such as mechanical robustness, and good thermochromic switching properties. Desired optical properties include a low refractive index and low absorption in the low temperature state. An important desired thermochromic switching property is low transmission in IR in the high temperature state.

### Summary

The invention provides, in certain non-limiting aspects, a liquid coating composition, a method of preparing a liquid coating composition, a method of preparing a coated article using a liquid coating composition, a thermochromic coating, a thermochromic material, a coated article, and a method of preparing a coated article which includes preparation of a liquid coating composition.

The invention provides in embodiments a thermochromic coating comprising a thermochromic component and at least one type of non-thermochromic nanoparticles, the coating having the optical characteristics $T_{vis} \times \Delta T_{760\text{-}1360\,nm}$ > 1500, preferably $T_{vis} \times \Delta T_{760\text{-}1360\,nm}$ > 2000; wherein Tvis is the % visible light transmission and $\Delta T_{760\text{-}1360\,nm}$ is the % transmission modulation in the range 760-1360 nm.

The invention provides in embodiments a thermochromic material comprising a thermochromic component, preferably monoclinic $VO_2$, which is optionally doped with a dopant; a binder, and at least one type of non-thermochromic nanoparticles, optionally in the form of granular material or a coating.

The invention provides in embodiments a method for preparing a thermochromic material, the method comprising: A) providing, as separate components, a thermochromic precursor component, a binder component, and a component containing, or consisting of, nanoparticles; B) combining at least said components into a liquid composition; C) optionally applying the liquid composition onto a substrate; and D) drying and curing and/or annealing the liquid composition, optionally on the substrate, to give a thermochromic material, optionally in the form of a coated article comprising a solid thermochromic coating.

The invention provides in embodiments a liquid coating composition comprising, in a single liquid phase, a thermochromic precursor component, a binder component, and nanoparticles; wherein preferably the thermochromic precursor component comprises a vanadium organometallic complex, the binder component preferably comprises an alkoxysilane or an oligomerized alkoxysilane, and the nanoparticles are preferably non-thermochromic nanoparticles, for example silica nanoparticles and preferably have an average particle size of at least 15 nm.

### Brief description of the drawings

Figure 1 is a photograph of an inventive coating (VSN-1) and a reference coating (VS).
Figure 2 is a graph illustrating thermochromic properties of a reference coating (black) and an inventive coating (grey).
Figure 3 is a graph illustrating the thermochromic properties of inventive coatings.

Figure 4 shows TEM-EDX images of an inventive coating.

Any embodiments illustrated in the figures are examples only and do not limit the invention.

## Detailed description

The invention is based, in certain aspects, on the surprising finding that the thermochromic properties of a thermochromic coating can be improved by including nanoparticles in the coating which are transparent for visible light and which are non-thermochromic. Non-thermochromic indicates the absence of thermochromic properties in the temperature range 0°C to 100°.

The size of the nanoparticles is typically such that the nanoparticles do not scatter in the visible light, e.g. below 100 nm. The size of the nanoparticles is for instance above 5 nm or above 10 nm to advantageously provide inhomogeneous distribution of $VO_2$ in the coating or thermochromic material.

In the present disclosure, the term 'cured coating' is used to refer broadly to a solid coating exhibiting thermochromic properties that is obtained from the liquid coating composition, typically using a preparation process comprises steps such as curing and/or annealing. Embodiments of the invention pertain in particular to a thermochromic cured coating.

The nanoparticles that are included in the liquid coating composition are incorporated into the thermochromic coating, i.e. in the cured coating. Suitably, the cured coating contains nanoparticles held together by a binder.

Furthermore, advantageously the inventive coating can have a relatively large thickness, such as above 150 nm, or above 200 nm, or even above 500 nm while maintaining colour neutrality. Herein colour neutrality indicates the lack of visible colour of the coating. The larger coating thickness advantageously makes the visual appearance of the coating less susceptible to variations in the thickness of the coating, in particular by moving the thickness out of the quarter-wavelength range for visible light (visible light: 400-700 nm). The larger coating thickness may also advantageously improve processability of the coating. The binder may contribute to mechanical properties of the coating. The coating is preferably a single layer coating having such a thickness of e.g. above 150 nm or even above 500 nm.

The present invention in an aspect provides a thermochromic coating comprising a thermochromic component and at least one type of non-thermochromic nanoparticles.

The coating preferably has the optical characteristics $T_{vis} \times \Delta T_{760\text{-}1360\,nm} > 1500$, more preferably above 2000

Herein Tvis is the % visible light transmission and $\Delta T_{760\text{-}1360\,nm}$ is the % modulation of the transmission in the range 760-1360 nm.

Tvis is measured at a temperature lower than the thermochromic switching temperature. The solar modulation $\Delta Tsol$ is e.g. calculated using following formula:

$$\Delta Tsol = \tau_e\,(cold) - \tau_e\,(hot)$$

wherein $\tau_e$ (cold) is the solar direct transmission of the material at a temperature lower than the thermochromic switching temperature and $\tau_e$ (hot) is the solar direct transmission of the material at a temperature above the thermochromic switching temperature.

Tvis and Tsol are for instance measured according to standard NEN-EN 410, in particular according to NEN-EN 410:2011. This European Standard specifies methods of determining the luminous and solar characteristics of glazing in buildings. Tvis and/or Tsol can also be measured using Method A as described in the present document.

$T_{vis} \times \Delta T_{760\text{-}1360\,nm}$ can be calculated by multiplication of the numeric percentage values of Tvis and $\Delta T_{760\text{-}1360\,nm}$.

Accordingly, the invention provides the remarkable feature that if non-thermochromic nanoparticles are added to the coating system, e.g. to a $SiO_2 / VO_2$ two-component coating system with optional dopants, the solar modulation strongly increases in the 760 -1360 nm range without a decrease in visible transmission. The range 760 -1360 nm is of specific interest because of the high intensity of solar light in this range, and because this range is complementary to the range of solar light above 1360 nm that can be permanently blocked by a low-e coating.

The thermochromic coating is for example a cured coating.

In a further embodiment, the thermochromic material is introduced in the form of a thermochromic pigment into the coating.

Embodiments of the invention pertain to a solid thermochromic material comprising a thermochromic component, e.g. monoclinic $VO_2$, which is optionally doped with a dopant; a binder, and at least one type of preferably non-thermochromic nanoparticles, optionally in the form of granular material or a coating. The binder is e.g. a dielectric binder and is preferably silica.

The invention also pertains to the thermochromic material as discussed in granular form, e.g. as a powder.

The thermochromic material in granular form is for instance a pigment composition, for example an IR pigment. The thermochromic material is for instance a powder. In an embodiment the thermochromic material is in particulate form. In a further embodiment, the thermochromic material is introduced in the form of a thermochromic pigment into the coating.

The invention also pertains to an article comprising the thermochromic material in granular form, e.g. comprising particles of solid thermochromic material. The article is e.g. a foil or a film. The article comprises the particles of the thermochromic material and e.g. a matrix such as a polymer matrix. The film comprises e.g. a layer comprising particles of the thermochromic material and a matrix and optionally additional layers, these layers are e.g. laminated. The additional layers e.g. include a polymer film.

The granular thermochromic material, e.g. the pigment, has, for instance, an optional particle size in the range of at least 50 nm or at least 100 nm and/or up to 250 nm.

The particle size of the granular thermochromic material is for instance measured using a laser diffraction particle size analyzer, and volume equivalent sphere diameter and volume weighted average.

The thermochromic material in granular form, e.g. the pigment composition, is for instance incorporated into a film or foil. The film comprises e.g. a polymeric matrix. The film is e.g. adhesive or self-adhesive. The film e.g. comprises a laminate comprising one or more polymeric layers and one or more layers comprising the thermochromic material. A layer comprising the thermochromic material is e.g. a composite layer comprising particles of the thermochromic material and a matrix, e.g. a polymeric matrix. Such a film is e.g. prepared by a method comprising a step of casting a slurry comprising a liquid phase, a polymer, and particles of the thermochromic material. The casted film is e.g. laminated with other films to produce a laminated film comprising particles of the thermochromic material.

The film or foil can e.g. be applied to float glass, glass windows and glass panels. This can be used e.g. for building and renovating buildings.

In an example embodiment of the coating and thermochromic material, all thermochromic component, e.g. monoclinic $VO_2$, is formed *in situ* during a curing or anneal process.

Preferably, the thermochromic component, e.g. $VO_2$, is included in the thermochromic material or coating in a weight fraction of at least 10 wt.% and/or less than 50 wt.% relative to all solid components of the thermochromic material or coating, more preferably 20 - 40 wt.%. Advantageously, the weight fraction of thermochromic component, e.g. $VO_2$, can be relatively low while providing excellent thermochromic properties of the material or coating.

Preferably, the thermochromic coating or thermochromic material includes the non-thermochromic nanoparticles in a weight fraction of at least 40 wt.% and/or maximum 80 wt.%, preferably 50 - 70 wt.%, relative to all solid components of the coating or of the material.

Said preferred amounts applies for all preferred types of non-thermochromic nanoparticles, e.g. also for the preferred silica nanoparticles.

With a lower weight fraction of non-thermochromic nanoparticles, the thermochromic properties of the coating may be less. With a higher weight fraction of non-thermochromic nanoparticles, the thermochromic properties may become less and/or coating thickness may become undesirably large.

Preferably, the coating includes the binder, e.g. silica binder, in an amount of 2 - 15 wt.%, relative to all solid coating components. In some embodiments, the nanoparticles are silica nanoparticles and the binder is a silica binder and the liquid coating composition includes the nanoparticles and the binder in a Si atom ratio of 5: 1 or higher (nanoparticles to binder), such as 10:1 or higher.

Preferably, the thermochromic component is monoclinic $VO_2$ (e.g. at 5°C), which is optionally doped with a dopant.

Preferably the coating has a thermochromic switching temperature in the range 1componentmaterial. The thermochromic switching temperature can be determined for example using method A described in WO 2020/242314A1.

The coating is preferably a single layer coating having such a thickness of e.g. at least 150 nm or even at least 500 nm

A non-limiting aspect of the invention provides a method for preparing a thermochromic material, the method comprising: A) providing, as separate components, a thermochromic precursor component, i.e. a component that is a precursor for a thermochromic component, a binder component, and a component containing, or consisting of, nanoparticles, in particular non-thermochromic nanoparticles; B) combining at least said components into a liquid composition; C) optionally applying the liquid composition onto a substrate; and D) drying and curing and/or annealing the liquid composition, optionally on the substrate, to give a thermochromic material, optionally in the form of a coated article comprising a solid thermochromic coating.

In some embodiments, step D involves annealing of amorphous $VO_2$ to provide preparing crystalline monoclinic $VO_2$ (M). In some embodiments, the amorphous $VO_2$ is provided and annealed as a powder and a granular thermochromic material is obtained. In some embodiments, the amorphous $VO_2$ is provided as a coating layer on a substrate. The annealing is done e.g. in the presence of an oxygen-containing atmosphere at a temperature of at least 200°C.

In some embodiments, step B of the method comprises:

1) providing a liquid composition comprising a vanadium (V) precursor, a reducing agent and a solvent; 2) allowing the vanadium (V) precursor and the reducing agent to react in the presence of a solvent to provide a vanadium (IV) complex solution; 3) precipitating amorphous $VO_2$ from said vanadium (IV) complex solution in the presence of at least part of said solvent, unreacted reducing agent, and/or reacted reducing agent, thereby obtaining a composition comprising amorphous $VO_2$; and step D involves: subsequently subjecting said composition to said annealing to provide crystalline monoclinic $VO_2$ (M); wherein non-thermochromic particles are added in any of the steps of step B or at least before step D.

In some embodiments, step C and D are used and the method involves drying and curing the liquid composition, applied as liquid coating on a substrate, to provide a thermochromic coating.

Also provided is a method of preparing a liquid coating composition comprising steps A and B. The prepared liquid composition is in particular a mixture comprising the thermochromic precursor component, the binder component, and the nanoparticles, and optional further components such as dopants. The invention also provides, in an aspect, a liquid coating composition prepared in this way.

For preparing a granular thermochromic material, optional step C is not used. The method comprises a step of drying the liquid composition to remove at least part of the liquid components from the liquid composition, e.g. by evaporation, to give a dried material, as part of step D.

Also provided is a method of preparing a thermochromic material from a liquid coating composition according to the invention, the method comprising providing the inventive liquid composition, or providing a liquid composition obtainable by steps A and B, followed by optionally step C and step D. Step C is used if a thermochromic coating is prepared.

The method involves in step A providing at least three components as separate components. This means that said three components are provided as physically separate components, which are combined in step B. Preferably, the separate components are each separately provided as a liquid material (e.g. suspension, solution), or as a granular, e.g. particulate, material, which materials can be mixed.

A further aspect of the invention is a liquid coating composition comprising, in a single liquid phase, a thermochromic precursor component, a binder component, and nanoparticles. Accordingly, the composition comprises a mixture of a thermochromic precursor component, a binder component, and nanoparticles. This liquid composition in principle can be prepared in any suitable way. Details and preferences of the liquid coating composition are discussed hereinafter.

The thermochromic material and coating preferably comprise $VO_2$ as thermochromic component. The thermochromic precursor component of the preparation methods and the liquid coating composition preferably comprises V atoms, including for instance V ions. The thermochromic precursor component is suitable to be converted into the thermochromic component, in particular into $VO_2$, by curing and/or annealing the coating.

The thermochromic precursor component is preferably a vanadium organometallic complex, and is preferably a precursor for $VO_2$ as thermochromic compound.

The vanadium metal complex is preferably an organometallic V(IV) complex which comprises one or more ligands. The complex preferably comprises as ligand a carboxylic acid or conjugate base thereof, in particular a dicarboxylic acid, such as oxalic acid, or the conjugate base of such an acid, such as oxalate. The ligand is e.g. a chelating ligand.

The binder component of the liquid coating composition is suitable to be converted into the solid binder, or solid matrix, of the cured coating. The binder component is for instance in the liquid phase, and is for instance a suspension. The binder component comprises for instance a binder and a liquid dispersion medium.

The binder component is typically a precursor for a solid material, in particular a dielectric solid, and is e.g. a precursor for $SiO_2$, $ZrO_2$, $TiO_2$, $Al_2O_3$, $HfO_2$, $MgF_2$,$CaF_2$, or an organosiloxane compound.

The precursor is preferably a silica precursor, more preferably pre-oligomerized or oligomerized tetraethyl orthosilicate (TEOS), typically with crosslinkable Si-OH groups.

The binder or binder component typically has film-forming properties. The binder preferably has low refractive index, e.g. below 1.9.

The binder component furthermore comprises for instance a compound that is liquid at 20°C and that is for example a solvent, a dispersion medium, or an alkoxide of Si.

Preferably, the binder component comprises an alkoxysilane or an oligomerized alkoxysilane.

The binder component comprises for instance an alkoxysilane, more preferably tetraethoxysilane. The alkoxysilane may at least in part be oligomerized. Preferably, the binder component comprises an alkoxysilane or an oligomerized alkoxysilane as a binder and a liquid dispersion medium.

The binder is e.g. pre-oligomerized tetraethoxysilane (POT). In some embodiments, the binder includes silica oligomers.

The liquid dispersion medium is for instance an organic solvent, such as propanol. An example preparation method for POT is described in US 2011/0021335A1.

The binder is present as molecular or colloidal species in the binder component, wherein the binder particles, if any, are smaller than 10 nm or even smaller than 7 nm. The particle size is e.g. the number average equivalent sphere diameter and can be determined for instance using electron microscopy.

The nanoparticles, as included in the liquid coating composition, in the cured coating, and in the component containing nanoparticles used in the preparation method, are typically non-thermochromic nanoparticles. The nanoparticles can be identified as being dielectric nanoparticles, and/or having a size of at least 10 nm or at least 15 nm, and/or being non-porous. In preferred example embodiments, the nanoparticles are dielectric nanoparticles with a size of at least 10 nm or at least 15 nm. The nanoparticles preferably have a size below 200 nm or below 100 nm. The dielectric nanoparticles are preferably silica nanoparticles.

In some embodiments, the nanoparticles are non-spherical, e.g. rod-shaped.

The use of a component containing nanoparticles in the preparation method does not mean that the other components used in the preparation method, in particular the thermochromic precursor component and the binder component, must be free of nanoparticles. In embodiments, the binder component may for example include silica oligomers and optionally small silica nanoparticles, e.g. the optional small silica nanoparticles have a size of less than 5 nm.

Importantly, the preferred method of preparing the liquid coating composition involves a step wherein already prepared solid nanoparticles, typically in a dispersion, are combined with the thermochromic precursor component. In comparison with forming nanoparticles *in situ,* this provides the advantage that the separately prepared nanoparticles can easily be relatively poor, or even substantially free, of the thermochromic species, e.g. $VO_2$.

The nanoparticles are made of a different material than the thermochromic component of the final cured coating.

In a preferred embodiment, the nanoparticles are substantially free of vanadium atoms. For instance the nanoparticles have an elemental composition including max. 1.0 wt.% V.

The cores or inner parts of the added nanoparticles are typically not altered by the steps of the coating method. In particular, the cores or inner parts of the added nanoparticles are suitably essentially free of thermochromic component and/or essentially free of $VO_2$ in the final cured coating. Thereby the nanoparticles form optically diluting pockets of the thermochromic coating.

Surprisingly it was found that the effect of diluting the thermochromic component (in particular $VO_2$) in the cured coating by adding nanoparticles is completely different from adding more binder, even in embodiments wherein the cured binder and nanoparticles both consist of silica.

Without wishing to be bound by way of theory, this difference in diluting effect between the added nanoparticles and the binder, could be due to the nanoparticles being at the relevant length scale, inhomogeneous, compared to adding more binder.

It is preferred that the added nanoparticles are not too small. The nanoparticles are for example at least 10 nm, or at least 15 nm, or at least 20 nm.

The nanoparticles are preferably less than 100 nm or less than 50 nm to avoid Mie scattering and to not reduce transparency of the coating for visible light.

For all aspects of the invention, the non-thermochromic nanoparticles preferably comprise a dielectric material, such as e.g. silica. The non-thermochromic nanoparticles preferably comprise, e.g. for at least 90 wt.%, metal oxide, such as silica. Preferably the non-thermochromic nanoparticles comprise at least 90 wt.% of one or more of dielectric materials, such as $SiO_2$ and $Al_2O_3$. Also possible are silicate particles, such as aluminosilicates, for instance clay particles, and layered double hydroxides.

Example materials for the non-thermochromic nanoparticles include $SiO_2$, $ZrO_2$, $TiO_2$, $Al_2O_3$, $HfO_2$, $MgF_2$, $CaF_2$, and organosiloxane compounds. The non-thermochromic nanoparticles preferably have a low refractive index, and preferably high transparency for visible light, preferably are non-absorbing for visible light (380-750 nm).

Preferred materials for the nanoparticles include $SiO_2$ and $Al_2O_3$, for example silica.

The non-thermochromic nanoparticles, e.g. nanoparticles of these materials, preferably have a particle size below 200 nm.

In a preferred embodiment, the nanoparticles are dielectric nanoparticles, e.g. metal oxide nanoparticles, more preferably silica nanoparticles, the preferred nanoparticles having an average particle size of at least 15 nm, and/or up to 200 nm or up to 100 nm. A particle size below 200 nm may advantageously ensure good optical transparency in visible light (less haze).

In preferred example embodiments of all aspects of the invention, the nanoparticle are silica nanoparticles with average particle size of 15 - 100 nm.

As mentioned, the invention in an aspect pertains to an inventive liquid coating composition comprising a thermochromic precursor component, a binder component, and nanoparticles; in particular combined in a single liquid phase, e.g. as a liquid mixture. Preferences for these components are as discussed above and as described hereinafter. The liquid coating composition is in particular a liquid mixture comprising these components. The liquid coating composition includes a liquid compound (a component that is liquid at 20°C) which provides the liquid phase. This liquid compound is e.g. at least in part provided by the binder component. This liquid compound may also be an additional component.

The liquid coating composition comprises e.g. one or more solvents, for instance including a solvent such as an alcohol. The liquid coating composition is typically liquid at 20°C. This contributes to correct application on the substrate.

The liquid coating composition comprises for instance a solvent and a vanadium (V) precursor with a reducing agent. The liquid coating composition comprises for instance a solvent and a vanadium (IV) complex.

The liquid coating composition may optionally further comprise a dopant. The dopant for examples comprises an ion of Mo, W, Ta, Nb, Al, F, or complexes thereof, or a mixture of these ions and complexes thereof. Doping with ions can in particular be used to optimize the optical switching properties and temperature of the cured coating. The cured coating and the coated article may also comprise such dopants.

In a prepared embodiment, the thermochromic precursor component preferably comprises a vanadium organometallic complex, the binder component preferably comprises an alkoxysilane or an oligomerized alkoxysilane, and the nanoparticles are preferably silica nanoparticles having an average particle size of at least 15 nm and/or less than 100 nm; and more preferably these three preferred components are used in combination, and the silica nanoparticles are e.g. non-porous.

Preferences for the liquid coating composition as an aspect of the invention also pertain to the liquid coating composition prepared by the method of preparing a liquid coating composition or as part of the method of preparing a coated article.

Preferably the liquid coating composition comprises V and Si in an atomic ratio in the range 0.5 to 1.1 V : Si; and the same preference applies for the thermochromic material and coating. Preferably the thermochromic precursor component comprises a vanadium organometallic complex, for liquid coating compositions having the V and Si the atomic ratio.

Preferably, the thermochromic material and coating comprises $SiO_2$ and $VO_2$ in a weight ratio of 3:1 - 1:2 $SiO_2$ to $VO_2$, preferably 2:1 - 1:1 $SiO_2$ to $VO_2$.

Preferably, the binder component and the nanoparticles both contain Si atoms. Preferably, at least 50 mol.% of the Si atoms, or at least 80 mol.%, in the liquid coating composition is provided by the nanoparticles; the same preference applies for the thermochromic material and coating. Preferably, the binder is a silica precursor and the nanoparticles are silica nanoparticles.

Preferably, the thermochromic coating and thermochromic material comprises silica, wherein at least 50 mol.% of the silica present in the coating or material is provided as the nanoparticles, i.e. by the nanoparticles compartment, e.g. at least 70 mol% or at least 80 mol.%, typically less than 90 mol.%.

An example method for preparing the liquid coating composition is for instance combining a solution comprising vanadium complex, with a component comprising nanoparticles, such as a dispersion of silica nanoparticles in a liquid carrier, e.g. a dispersion of amorphous silica nanoparticles, and with a liquid comprising oligomerized alkoxysilane, such as pre-oligomerized tetraethoxysilane (TEOS). The order of mixing is not important. It is preferred to mix the component into a single mixture and to apply the mixture as liquid coating composition onto a substrate. This example method can also be used in an exemplary embodiment of the method for preparing a coated article in steps A and B.

An example preparation method for preparing a coated article according to the invention comprises applying a liquid coating composition according to the invention onto a substrate, using a coating method such as for example dip coating, spin coating, roller coating, spray coating, or curtain coating.

The method further typically comprises a step of drying the coating on the substrate, e.g. by evaporation of liquid components, e.g. at a temperature of less than 150°C, such as e.g. at a temperature between 20°C and 100°C.

The method further comprises curing the coating, also referred to as annealing the coating, on the substrate to obtain the coated article. In particular, the non-evaporated thermochromic precursor component is transformed into the thermochromic component. For instance, vanadium metal complex included in the dried coating on the substrate is cured into $VO_2$. Furthermore, for instance the binder is cured into a solid matrix.

An example annealing step involves heating to a temperature above 200°C or above 300°C, e.g. to a temperature less than 500°C, in an inert atmosphere or in an atmosphere containing oxygen. Example annealing and curing steps that can be used are described in WO 2020/242314; WO 2021/242109 and WO 2022/010354. The annealing steps typically used, such as those described in WO 2020/242314; WO 2021/242109 and WO 2022/010354, do not significantly affect the nanoparticles component of the liquid coating composition. Thereby the curing or annealing steps can be broadly varied.

A non-limiting aspect of the invention is the method of preparing a coated article which includes both the preparation of the liquid coating composition and the use of that liquid coating composition to prepare the coated article comprising the solid thermochromic coating. Also for this method, the liquid coating composition is preferably as discussed herein before, and all preferences specified for the liquid coating composition prepared as part of this combined preparation method also apply to the method of preparing a liquid coating composition, the inventive liquid coating composition, and the method of preparing a coated article.

The invention also provides a thermochromic material. The thermochromic coating comprises for example a binder, in particular a solid binder, a thermochromic component, e.g. monoclinic $VO_2$, and non-thermochromic nanoparticles. The material is e.g. a solid thermochromic coating or e.g. granular material. Preferably, the monoclinic $VO_2$ and non-thermochromic nanoparticles are physically held together by the solid binder in the thermochromic material.

The invention also provides a coated article comprising a substrate and the solid thermochromic coating. All preferences described for the coating of the coated article also apply for the thermochromic coating as such.

The nanoparticles provide for zones with a relatively low concentration of the thermochromic component in the thermochromic material.

The thermochromic component typically exhibits a transmission decrease in infrared (800-2400 nm) from temperatures below a switching temperature to temperatures above said switching temperature, and preferably in the range 800 - 1600 nm. The switching temperature is for instance in the range 10 - 100°C, preferably in the range 20 - 40°C, for example determined using Method A2 described herein. The thermochromic material and coating may comprise doping ions to adjust the switching temperature.

Preferably, the non-thermochromic nanoparticles are essentially free of the thermochromic component, e.g. free of V atoms in case of $VO_2$ as thermochromic component. This gives an inhomogeneous distribution of V atoms in the coating. This distribution can be observed and/or determined using e.g. transmission electron microscopy - energy-dispersive X-ray spectroscopy (TEM-EDX).

Preferably for the thermochromic material, the thermochromic coating and the coated article, the thermochromic component is $VO_2$, in particular monoclinic $VO_2$ (at 5°C), and the binder is preferably silica. Preferably the nanoparticles are metal oxide nanoparticles; preferably having a size of 10 nm to 150 nm, e.g. silica particles.

The invention also pertains to a coated article obtainable by or obtained with the method according to the invention for preparing a coated article; wherein the coated article comprises a substrate and a thermochromic coating. Preferences and details for the substrate and thermochromic coating of the coated article are the same as described hereinbefore.

The substrate, for all embodiments of the thermochromic coating and the coated article, is generally a solid material, and e.g. comprises or consists of glass, e.g. the substrate is float glass. The substrate is for instance a glass sheet. The glass is for instance silica-based glass, such as soda-lime glass. Optionally, the substrate is already coated, e.g. the substrate is coated float glass, and the thermochromic coating is formed on the coating. For instance a silica coating is used as barrier coating.

The coated article is for instance used as a window pane for a building, in particular as part of an insulating glass unit.

The coated article may comprise additional coatings. The coated article for instance comprises a first surface and an opposed second surface, with for instance the coating according to the invention on the first surface, and an additional coating on the first surface or on the second surface. The second coating for instance reflects long wave IR (e.g. above 1200 nm).

The invention also pertains to insulating glass unit (IGU) comprising a first glass sheet as the coated article having the thermochromic coating on the first surface, and a second glass sheet, wherein an additional coating is applied preferably on the second glass sheet; the insulating glass unit optionally includes one or more further glass sheets. The additional coating for instance reflects long wave IR (e.g. above 1200 nm). The additional coating is for instance a low emissivity coating (low-e coating). The additional coating is for instance a thin metal coating. The additional coating can also be, e.g., combined with the thermochromic coating in a coating stack on the first surface of the first glass sheet. The insulating glass unit typically furthermore comprises a spacer for spacing the glass sheets and a sealing at the edge, thereby providing an insulating gas space between the glass sheets that is filled with e.g. air or a noble gas such as Ar or Kr. In an insulating glass unit, the thermochromic coating is preferably applied on the inner surface of the outer glass sheet, wherein the outer glass sheet is the glass sheet exposed to the outside environment when installed in a building. The additional coating is preferably applied on the inner surface of the inner glass sheet. The inner surface of the glass sheets are the surfaces exposed to the insulating glass space.

The coated article is for instance used for smart window applications for buildings.

Preferably the thermochromic coating has a thickness of at least 150 nm, or of at least 200 nm, or of at least 300 nm, preferably at least 500 nm or even at least 700 nm, and is preferably provided as a single layer.

The particle size of the non-thermochromic nanoparticles, e.g. $SiO_2$ nanoparticles, can be measured using e.g. DLS (dynamic light scattering) and SAXS (Small-angle X-ray scattering) or using electron microscopy (EM). For spherical particles, the diameter can be used. For other types of particles, the equivalent diameter can typically be used. Preferably, the median, number average (D50) value is used, in particular the equivalent area diameter measured using EM, for the nanoparticles size, this size e.g. being in the range of 10 to 50 nm.

All preferences for the thermochromic coating and thermochromic material apply equally to the product of the preparation methods. All preferences for components of the thermochromic coating and thermochromic material apply equally for the components used in the preparation method, and for the components of the liquid coating composition, and vice versa.

**Examples**

The invention will now be further illustrated by the following non-limiting examples. These examples do not limit the invention and do not limit the claims.

Methods

**1.1 Preparation vanadyl oxalate solution [0.4M] (A)**

An oil-bath is pre-heated to 80°C. A bottle with wide bottleneck, equipped with an overhead stirrer and a funnel is placed in the oil-bath. 70.2 g (0.780 mol) oxalic acid and 60.0 g (3.33 mol) demineralized water is added to the bottle and stirred on low stirring speed of 120 rpm for 15 minutes. After 15 minutes, 33.0 g (0.181 mol) $V_2O_5$ is added to the reaction with small amounts at a time. After addition of the $V_2O_5$ in approximately 25 minutes, the reaction is stirred for another 30 minutes at 80 °C. Subsequently, the oil-bath is removed to allow the mixture to cool to room temperature. When the mixture is at ambient temperature, the mixture is diluted using 740.4 g 2-propanol to obtain a 0.4 M solution.

**1.2 Preparation silica solution [0.4M] (B)**

156.3 g (0.750 mol) tetraethoxysilane (TEOS), 135.0 g (7.50 mol) demineralized water, 4.5 g (0.075 mol) acetic acid and 347.3 g 2-propanol are added to an Erlenmeyer under moderate stirring. The solution is stirred for an additional 24 hours at room temperature. After 24 hours, the solution is diluted using 1234.4 g 2-propanol and subsequently acidified by the addition of approximately 1.5 g $HNO_3$. A 0.4 M silica solution (pH=2) is obtained. The term 'silica solution' is used to identify a liquid phase comprising silica species. Solution B can be referred to as pre-oligomerized tetraethoxysilane (POT).

**1.3 Preparation NP dispersion [0.4M] (C)**

A bottle with wide bottleneck is placed onto a magnetic stirrer. 460 g 2-propanol is added to the bottle. Whilst stirring of about 150 - 200 rpm, 10 g (0.167 mol) acetic acid is added to the 2-propanol. Subsequently, 30 g silica nanoparticles (40 wt.% suspension in water, average particle size 22 nm, stabilized) is added a little at the time to the solution. The dispersion is stirred for an additional 10 minutes at room temperature before it is used in the coating formulation. The nanoparticles dispersion is an alkaline 40% aqueous dispersion of colloidal silica with a particle size of 22 nm.

**1.4 Preparation coating formulations**

The 0.4 M vanadyl oxalate solution A (Method 1.1) is used for the coating formulations, as well as Silica solution B (Method 1.2) and NP dispersion C (Method 1.3). The density of $VO_2$ (4.57 $g/cm^3$) and $SiO_2$ (1.5 $g/cm^3$) are assumed. The amounts are indicated in the examples hereinafter.

**2.0 Preparation of glass substrate**

The coatings are applied using a dip-coating technique. In this chapter, the pre-treatment of the glass substrate, application of the barrier layer, application of the vanadium-silica layer, and the annealing procedures are described.

**2.1 Pre-treatment of glass-substrate**

Pilkington Optiwhite™ glass and borosilicate glass of 4 mm thick is cut to a size of 5.0 × 10.0 cm and in a size of 10.0 × 10.0 cm. The resulting plates are placed into a Branson 8510 ultrasonic bath filled with a mixture of 70 mL hydrogen peroxide, 70 mL ammonium hydroxide, and 12 L demineralized water and ultrasonicated for 2 hours. The glass is then removed from the bath, rinsed with demineralized water, and left to dry at ambient conditions. A silica barrier layer was applied as generally described in Example 1 of WO/2021/242109.

**2.2 Application of vanadium-silica-NP coating**

The thermochromic coating was applied single-sided using dip-coating. To achieve this, one side of the barrier coated glass substrate was masked using d-c-fix® self-adhesive foil. The substrates were submerged into and retracted from a coating formulation described in Methods para. 1.4 at various dipping speeds of 1 mm/s to 8 mm/s (withdrawal speed) with a holding time of 10 seconds. "Dip speed" is used to refer to the withdrawal speed.

After complete retraction from the coating formulation, the masking foil was removed and the glass substrate was placed on a 6 inch Si wafer / onto quartz pins, the non-coated side of the glass-substrate on facing the Si wafer / the quartz pin. About one minute waiting was used for evaporation of volatile species.

**2.3 Annealing of vanadium-silica-NP layer coating**

Annealing of the coatings was done using a Jipelec™ Jetfirst PV Rapid Thermal Processor.

**2.3.2 Annealing in Jipelec™ Jetfirst PV Rapid Thermal Processor**

The annealing program used in the Jipelec™ Jetfirst PV Rapid Thermal Processor is described below.

**2.3.2.1 Two-step oven procedure**

In a preset atmosphere containing air, the silicon wafer with coated substrate, glass side facing the lamps used for heating, was heated in 426 seconds till 270°C and hold 480 seconds isothermal. The chamber is then flushed in 290 seconds into an atmosphere containing a small amount of oxygen (50 - 500 ppm by volume) in nitrogen.

After flushing, the chamber is heated to a temperature of 425°C in 376 seconds. Subsequently, the material was further heated till 450°C for 970 seconds, after which it was kept isothermal for 30 seconds. The gas flow throughout the complete heating cycle was set at 452 cm$^3$/minute at 20°C and 1 bar whilst retaining the oxygen to nitrogen ratio.

After the isothermal step the gas flow was reduced to 200 cm$^3$/minute and cooled to approximately 250°C in 250 seconds. The gas flow was at that time increased to 2000 cm$^3$/minute. The glass containing the final product was removed from the oven at a temperature below 150°C and used as such.

**Method A: Visible light transmission and solar modulation values**

*Tvis* and *ΔTsol* were calculated using transmission data obtained by method A1 and formulas for visible light transmission and solar direct transmission according to NEN-EN 410.

*Tvis (visible light transmission):*

The visible light transmittance $\tau_v$ of the glazing is calculated using the following formula:

$$\tau_v = \frac{\sum_{\lambda=380\,nm}^{780\,nm} D_\lambda \tau(\lambda) V(\lambda) \Delta\lambda}{\sum_{\lambda=380\,nm}^{780\,nm} D_\lambda V(\lambda) \Delta\lambda}$$

wherein: $D_\lambda$ is the relative spectral distribution of illuminant D65 (see Publication CIE No. 15, Colorimetry, 3rd ed (2004)); $\tau(\lambda)$ is the spectral transmittance of the glazing; $V(\lambda)$ is the spectral luminous efficiency for photopic vision defining the standard observer for photometry (see Publication CIE No. 15, Colorimetry, 3rd ed. (2004)); $\Delta\lambda$ is the wavelength interval.

*ΔTsol (solar modulation):*

The solar modulation *ΔTsol* is calculated using following formula:

$$\Delta Tsol = \tau_e\,(cold) - \tau_e\,(hot)$$

wherein $\tau_e$ (cold) is the solar direct transmission of the glazing in the cold state; $\tau_e$ (hot) is the solar direct transmission of the glazing in the hot state.

The solar direct transmittance $\tau_e$ of the glazing is calculated using the following formula:

$$T_e = \frac{\sum_{760\,nm}^{1360\,nm} S_\lambda \tau(\lambda)\Delta\lambda}{\sum_{760\,nm}^{1360\,nm} S_\lambda \Delta\lambda}$$

wherein $S_\lambda$ is the relative spectral distribution of the solar radiation (see Publication CIE No. 85, Solar spectral irradiance, technical report (1989)); $\tau(\lambda)$ is the spectral transmittance of the glazing; $\Delta\lambda$ is the wavelength interval.

*Method A1: Optical measurements*

The coatings were analysed using a Perkin Elmer UV/VIS/NIR Spectrometer Lambda 750 with UL150t, this is a spectrometer equipped with an upward looking 150 mm integrating sphere accessory with temperature controlled sample holder. The substrates where heated and cooled at a rate of 1°C/min at 2°C intervals in a temperature range of -10°C till 120°C. The subsequent transmission and reflection were measured between 250-2400 nm with 10 nm intervals. The temperature measurement was determined by placing a thermocouple at the coated side, which was facing the integrating sphere.

Example 1

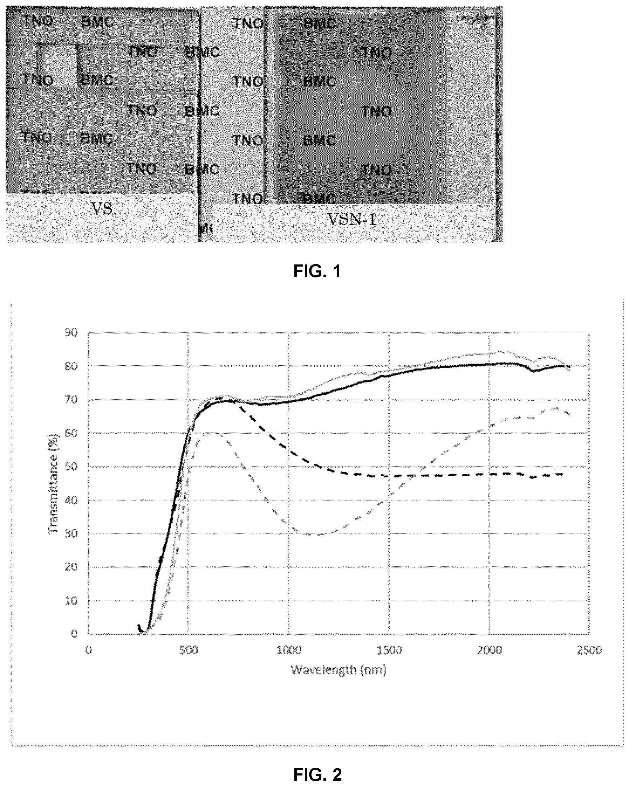

Liquid coating compositions were prepared using the formulations of Table 1, The liquid components were prepared as described under "Methods" and applied to a substrate, using the dip coat withdrawal speed of 3 - 4 mm/s and annealed in the Rapid Anneal Furnace using the procedure described in subparagraph 2.3.2.1 "Two-step oven procedure". The pre-treatment of the glass substrate, application of the barrier layer, application of the vanadium-silica layer, and the annealing procedures as described under "Methods" were used. Component A is the thermochromic precursor component, component B is the binder, component C is the nanoparticles component. Table 1 indicates compositions in grams of solution, grams of actual $VO_2$ respectively silica species in the formulation and the weight fraction of components relative to all solid coating components. Comparative coating VS is the same as sample 2B prepared in Yeung et. al, Solar Energy Materials and Solar Cells, 230 (2021), 111238. Results are given in Table 2 and Fig. 1 and 2.

Fig. 1 is a picture of the two coatings which are previously mentioned. On the left side is the comparative VS ($VO_2$-$SiO_2$) coating and on the right side is the VSN-1 ($VO_2$-$SiO_2$-Nanoparticles) coating. The yellow part is the thermochromic part and the green/blue part for the coating does not have thermochromic properties.

Fig. 2 is a graph showing that the addition of non-thermochromic nanoparticles results in a steep decrease in the transmission at wavelengths of 760 - 1360 nm. This the most interesting part for the thermochromic coating. Dashed line is at 20°C, solid line at 120°C, black is reference sample VS, grey is inventive sample VSN-1.

IR above 1500 nm can typically be blocked by a low e coating of an insulating glass unit of a window pane. Hence, Fig. 2 demonstrates that good optical switching properties are obtained, in particular high transmittance in the LT state for the inventive coating, even with a much thicker coating.

Table 1

|  | $VO_2$ (A) | $SiO_2$ (B) | NP (C) | $VO_2$ (A) | $SiO_2$ (B) | NP (C) | $VO_2$ (A) | $SiO_2$ (B) | NP (C) |
|---|---|---|---|---|---|---|---|---|---|
|  | (g) sol | (g)sol | (g)sol | (g) | (g) | (g) | (wt. %) | (wt. %) | (wt. %) |
| VS * | 240.86 | 109.14 |  | 7.99 | 2.62 | 0.00 | 75.29 | 24.71 | 0.00 |
| VSN-1 | 376.39 | 60.17 | 63.73 | 12.49 | 1.45 | 25.49 | 31.67 | 3.67 | 64.66 |

Table 2

|  |  | Layer thickness (nm) |  |  |  |  |
|---|---|---|---|---|---|---|
| Sample | Dip speed [mm/s] | Average |  | STD | ΔT1200nm | ΔT1600nm |
| VS * | 2 | 96 | ± | 11 | 23.1 | 31.2 |
| VSN-1 | 8 | 1045 | ± | 56 | 45.4 | 33.6 |

Example 2

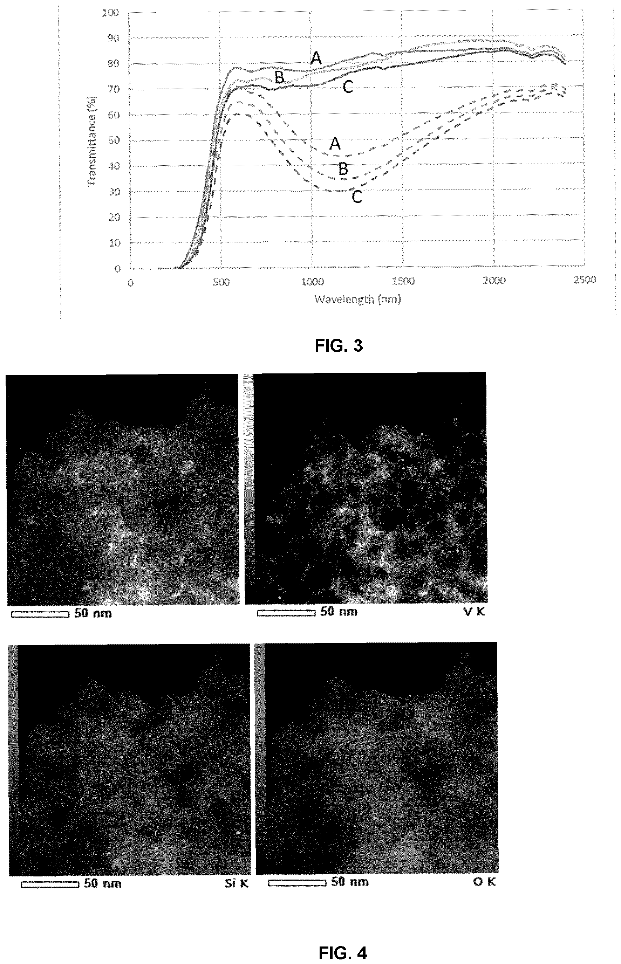

Coatings having substantially the same composition as coating VSN-1 (less than 1% differences in composition) were prepared having a thickness of about 700 nm (A), about 980 nm (B) and about 1020 nm (C) by using a dip withdrawal speed of 4 mm/s, respectively 6 mm/s and 8 mm/s. Coating C was prepared to duplicate coating VSN-1. The optical transmission properties are shown in Fig. 3. Dashed line is at 20°C, solid line at 120°C. The addition of nanoparticles consistently results in a steep decrease in the transmission at wavelengths of 760 - 1360 nm at high temperature, independent of the layer thickness. The valley does not shift in wavelength due to the different thicknesses.

Example 3

Table 3 shows the thermochromic performance properties of three reference coatings (VS as in Example 1; VS-2 and VS-3) and four inventive coatings (coating VSN-1 of Example 1 and coatings A, B and C of Example 2).
SSF is $T_{vis}$ [%] multiplied by $\Delta T_{sol}$ [%] (numerical values). $\Delta T_{sol}$ [%] is calculated for 300 - 2500 nm, and further using Method A described herein. $\Delta T_{sol}$ (760-1360 nm) is calculated in the same way for the range 760 - 1360 nm.
$\Delta G$ is the difference of total solar energy transmittance (G) through a window panel between the hot and the cold state of the coating, in which per state the G value is calculated according to standard NEN-EN 410:2011; for a double glazing IGU with an additional low-e coating.

Table 3

|  | VS | VS-2 | VS-3 | VSN-1 | A | B | C |
|---|---|---|---|---|---|---|---|
|  | * | * | * |  |  |  |  |
| Thickness [nm] |  |  |  | 1045 | 700 | 980 | 1020 |
| Tvis [%] | 66.1 | 67.4 | 67.5 | 67.1 | 74.6 | 69.3 | 66.1 |
| $\Delta T_{sol}$ [%] | 11.8 | 8.9 | 8.6 | 22.9 | 17.5 | 20.7 | 22 |
| $\Delta T_{sol}$ (760-1360 nm) [%] | 13.7 | 11.6 | 11.8 | 35.7 | 27.2 | 32.1 | 34.5 |
| SSF | 780 | 600 | 581 | 1537 | 1306 | 1435 | 1454 |
| $T_{vis}$ * $\Delta T_{sol}$ (760-1360 nm) | 906 | 780 | 798 | 2397 | 2032 | 2224 | 2281 |
| $\Delta G$ [%] | 5 | 4 | 3 | 13 | 10 | 11 | 13 |

Example 4

A coating D was prepared having the same composition as coating VSN-1 and using the same methods as in Example 1. Coating D has high transmittance in the low temperature LT state (20°C), and significantly lower transmittance in the high temperature HT state (120°C), in the range 800 - 1500 nm, with a steep decrease in transmission in the range 700 - 1200 nm in the HT state. Coating D was analysed using TEM-EDX. The sample was scraped from a coating on a glass substrate according to the invention.
A representative view shown in Fig. 4. The inhomogeneous distribution of V is clearly visible. The pockets that are poor in V correspond to Si rich zones. This confirms that the nanoparticles, spherical nanoparticles of 22 nm in this example, provide for regions of the coating that are poor in thermochromic component.

**Claims**

1. A thermochromic coating comprising a thermochromic material and at least one type of non-thermochromic nanoparticles, the coating having the optical characteristics $T_{vis} \times \Delta T_{760-1360\,nm} > 1500$, preferably $T_{vis} \times \Delta T_{760-1360\,nm} > 2000$; wherein Tvis is the % visible light transmission and $\Delta T_{760-1360\,nm}$ is the % transmission modulation in the range 760-1360 nm.

2. A coating according to claim 1, wherein all thermochromic material is formed *in situ* during a curing or annealing process.

3. A coating according to claim 1 or 2, wherein the thermochromic material is included an amount of 10 to 50 wt.%

relative to all solid coating components.

4. A coating according to any of the preceding claims, including the non-thermochromic nanoparticles in an amount of 40 - 80 wt.% relative to all solid coating components.

5. A coating according to any of the preceding claims, wherein the thermochromic material is monoclinic $VO_2$, which is optionally doped with a dopant, and preferably has a thermochromic switching temperature in the range of 15°C to 25°C.

6. A coating according to any of the preceding claims, wherein the non-thermochromic nanoparticles are silica nanoparticles having an average particle size of 15 nm to 100 nm.

7. A coating according to any of the preceding claims, being a single layer and having a thickness of at least 500 nm.

8. A thermochromic material comprising monoclinic $VO_2$, which is optionally doped with a dopant; a binder, and at least one type of non-thermochromic nanoparticles, optionally in the form of granular material or a coating.

9. The material according to claim 8, wherein thermochromic nanoparticles are silica nanoparticles having an average particle size of 15 nm to 100 nm.

10. A method for preparing a thermochromic material, the method comprising:

   A) providing, as separate components, a thermochromic precursor component, a binder component, and a component containing, or consisting of, nanoparticles;
   B) combining at least said components into a liquid composition;
   C) optionally applying the liquid composition onto a substrate; and
   D) drying and curing and/or annealing the liquid composition, optionally on the substrate, to give a thermochromic material, optionally in the form of a coated article comprising a solid thermochromic coating.

11. The method according to claim 10, wherein the binder component comprises an alkoxysilane or an oligomerized alkoxysilane.

12. The method according to claim 10 or 11, wherein the nanoparticles are silica nanoparticles having an average particle size of at least 15 nm; preferably wherein the thermochromic precursor component comprises a vanadium organometallic complex; preferably wherein the liquid coating composition comprises V and Si in atomic ratio in the range 0.5 to 1.1 V : Si; preferably
wherein the binder component and the nanoparticles both contain Si atoms.

13. The method according to claim 12, wherein the thermochromic precursor component comprises a vanadium organometallic complex; wherein the liquid coating composition comprises V and Si in atomic ratio in the range 0.5 to 1.1 V : Si; and wherein the binder component comprises an alkoxysilane or an oligomerized alkoxysilane.

14. A liquid coating composition comprising, in a single liquid phase,
a thermochromic precursor component, a binder component, and nanoparticles; wherein preferably the thermochromic precursor component comprises a vanadium organometallic complex, the binder component preferably comprises an alkoxysilane or an oligomerized alkoxysilane, and the nanoparticles are preferably silica nanoparticles having an average particle size of at least 15 nm.

15. The liquid coating composition according to claim 14, wherein the thermochromic precursor component comprises a vanadium organometallic complex and the liquid coating composition comprises V and Si in atomic ratio in the range 0.5 to 1.1 V : Si.

**FIG. 1**

**FIG. 2**

FIG. 3

FIG. 4

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 22 19 3758

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/242314 A1 (TNO [NL]; CHEMELOT SCIENT PARTICIPATIONS B V [NL]) 3 December 2020 (2020-12-03) * page 14, line 28 – page 15, line 33 * | 8-13 | INV. C03C17/00 C03C17/25 |
| A | SCHLÄEFER JOHANNES ET AL: "Thermochromic VO2-SiO2 nanocomposite smart window coatings with narrow phase transition hysteresis and transition gradient width", SOLAR ENERGY MATERIALS AND SOLAR CELLS, ELSEVIER SCIENCE PUBLISHERS, AMSTERDAM, NL, vol. 200, 29 May 2019 (2019-05-29), XP085797474, ISSN: 0927-0248, DOI: 10.1016/J.SOLMAT.2019.109944 [retrieved on 2019-05-29] * paragraphs [02.1], [02.2], [02.3], [02.4] * | 8-13 | |

**TECHNICAL FIELDS SEARCHED (IPC)**

C03C

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| Munich | 13 April 2023 | Pollio, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04E07)

Europäisches
Patentamt

European
Patent Office

Office européen
des brevets

INCOMPLETE SEARCH
SHEET C

**Application Number**

EP 22 19 3758

Claim(s) completely searchable:
8-13

Claim(s) not searched:
1-7, 14, 15

Reason for the limitation of the search:

1) The present application contains 15 claims, of which 3 product claims are independent. There is no clear distinction between the independent claims because of overlapping scope. The claims are drafted in such a way that as a whole do not comply with the provisions of clarity and conciseness in Article 84 EPC. Non-compliance with the substantive provisions is such that a meaningful search of the whole claimed subject-matter cannot be carried out (Rule 63 EPC and Guidelines B-VIII, 3). In any case in following examination proceedings the applicant would be asked to limit the number of independent product claims in line with the requirements of Rule 43(2) EPC.

2) Present claim 1 relates to a coatings having given desired property, namely that the coating has the optical characteristics TVis x DeltaT 760-1360 nm > 1500, wherein Tvis is the % visible light transmission and DeltaT 760 -1360 nm is the% transmission modulation in the range 760-1360 nm. In first instance this property represents a result to be achieved (see GL F-IV, 4.10), which cannot be allowed in the present case because it clearly amounts in claiming the underlying technical problem. In any case claim 1 does not fulfill the requirements of Article 84 EPC, because it does not contain all feature necessary to achieve the technical effect, features which are clearly essential for the implementation of the invention (see also GL F-IV, 4.5.*). At a first glance, it would seem that at least the subject matter of claims 3, 4, 5, 6 and the indication that a silica binder is present is needed to direct the man skilled in the art to achieve the claimed parameter.

3) Present claim 1 relates to a product defined (inter alia) by reference to a parameter (see above). When defining a subject to be searched the applicant shall take into account the relevant legal framework in relation to parameters (see GL F-IV, 4.11.*). In particular the claimed parameter appears to represent an unusual parameter (see GL F-IV, 4.11.1), so that the burden of proving that the parameter is not disclosed in the prior art shifts to the applicant.

4) The whole application is only concerned with monoclinic vanadium oxide as thermochromic material. Furthermore, there is only support for silica nanoparticles (see also GL F-IV, 6.1-6.3).

5) The attention of the applicant is drawn to an issue, which might impair the possibility of defending a product claim. It is widely known in the state of the art to provide a vanadium oxide thermochromic material in a matrix of hydrolisable alkoxysilanes. The binding matrix is the same that can be used to produce nanoparticles. Therefore, it is questionable that a product obtained using monoclinic VO2, silica nanoparticles and alkoxysilanes is distinguishable from a product made using monoclinic VO2 and alkoxysilanes based binder.

These issues have been brought to the attention of the applicant. Among other the applicant argued that claims 1, 8 and 14 shall be regarded to fall under Rule 43(2)(a) and/or (c). The examining division do not share this opinion.

Europäisches
Patentamt

European
Patent Office

Office européen
des brevets

**INCOMPLETE SEARCH
SHEET C**

The subject matters of these claims are not interrelated within the meaning of Rule 43(2)(a). They share simply features, namely the presence of a thermochromic material, a binder and nanoparticles. However, the characteristics of the materials are different for different claims and the different claims do not fall within the explication given in the Guidelines (see F-IV, 3.2(i)). Similarly, the different claims cannot be said to be alternative ways of solving the same problem (Rule 43(2)(c)), because they are directed to different products: claim 1 is directed to a thermochromic coating, claim 8 to a thermochromic material and claim 14 to a liquid coating. Consequently, they solve different problems.

Referring to page 10, line 28 and ff. the applicant argued that the effect of the subject matter shall not be regarded as being limited to the use of VO2 as thermochromic material. Nevertheless, it is not clear from the passage cited, whether this is an evidence or a supposition. It remains the fact that the whole description is only concerned with VO2, so that the reader would not even know from the description which other material could be suitable. Therefore, the division remains of the opinion that a search involving whatever thermochromic material is not compatible with the actual disclosure of the application.

Taking in account the answer proposed by the applicant, in which he expressed preference for claim 8 and defended claim 10, the search has been limited to the subject matter of claims 8, 9 and 10 - 13, where claim 10 is limited to involve monoclinic VO2 as the thermochromic material.

## ANNEX TO THE EUROPEAN SEARCH REPORT
## ON EUROPEAN PATENT APPLICATION NO.

EP 22 19 3758

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2023

| Patent document cited in search report | | Publication date | Patent family member(s) | | Publication date |
|---|---|---|---|---|---|
| WO 2020242314 | A1 | 03-12-2020 | CN | 114514209 A | 17-05-2022 |
| | | | EP | 3976543 A1 | 06-04-2022 |
| | | | US | 2022306526 A1 | 29-09-2022 |
| | | | WO | 2020242314 A1 | 03-12-2020 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020242314 A
- WO 2021242109 A
- WO 2020242314 A1

- US 20110021335 A1
- WO 2022010354 A

**Non-patent literature cited in the description**

- **YEUNG.** *Solar Energy Materials and Solar Cells,* 2021, vol. 230, 111238

- *Publication CIE No. 85, Solar spectral irradiance, technical report,* 1989